# EUROPEAN PATENT SPECIFICATION

(11) **EP 1 715 935 B1**
(45) Date of publication and mention of the grant of the patent: **16.04.2008**
(21) Application number: 04712626.3
(22) Date of filing: 19.02.2004
(51) Int. Cl.: B01D 35/147, B01D 27/10

(54) **MICRO-FILTER DEVICE WITH BY PASS AND METHOD OF DESIGN THEREFOR**
MIKROFILTERVORRICHTUNG MIT BYPASS UND ZUGEHÖRIGES AUSLEGUNGSVERFAHREN
DISPOSITIF MICROFILTRANT AVEC BY-PASS ET SON DIMENSIONNEMENT

(43) Date of publication of application: 02.11.2006
(73) Proprietor: NTZ Nederland BV, 3047 BP Rotterdam (NL)
(72) Inventor: SCHAERLAECKENS, Wilhelmus Petrus Maria, NL-3047 BP Rotterdam (NL)
(74) Representative: Dekker-Garms, Alwine Emilie
(86) International application number: PCT/IB2004/000419
(87) International publication number: WO 2005/087345

(56) References cited:
- EP-A- 1 312 405
- US-A- 3 970 557
- US-A1- 2003 010 725
- PATENT ABSTRACTS OF JAPAN vol. 1999, no. 05, 31 May 1999 (1999-05-31) & JP 11 047518 A (MITSUBISHI ELECTRIC CORP), 23 February 1999 (1999-02-23)

## Description

The present invention relates to a micro-filter device as defined in the preamble of claim 4 and to a method for designing the same as defined by claim 1.

Such micro-filtering devices are generally known, e.g. from the PCT-patent publication WO-0107142 in the name of Applicant, and from SAE paper 2001-01-0867 "Automatic transmission hydraulic system cleanliness - the effects of operating conditions, measurement techniques and high efficiency filters", which document is hereby regarded included.

Rather than conventional, so-called full flow filters which in fact rely on blocking particles through the provision of sufficiently small openings, and which therefore are surface based, and often of an expensive, synthetic type of material, the present micro-filter is cellulose fibre based. Such cellulose fibre based micro-filters rely on electrostatic forces for binding particles while on their way through the filter material. For this reason micro filters rely on a relatively thick body of filtering material through which oil is to be passed, and within which a main part of the "filtering" effect takes place, at least for the smallest particles. At conventional filters on the other hand filtering solely takes place on the surface of the material, for which reason the latter is maximised by using folded or pleated cardboard or other sheet material. Consequently conventional filters have a relatively low resistance, allow a relative large flow and may in principle be cleaned by reversing a flow of medium through the filter. Micro filters may bind very small particles within its filtering body - are therefore here denoted in-depth or in-body filters, but have a relatively large flow resistance and are not reusable by inverting flow of medium. Known micro filters therefore mostly if not always come in by pass configuration rather than in an in-line configuration as for conventional full flow filters. Yet it is, for reason of a superior filtering grade, a technical aim to entirely replace conventional filters by micro-filters within an in-line configuration, i.e. preferably within an existing structure for a hydraulic flow path of a mechanical device to be lubricated. In principle such may easily be done on the basis of an ultra high efficiency feature of the micro-filter, which effects a cleaning of oil within a passing rate, which is only a fraction from that at conventional filters.

At replacement of full flow filters in existing designs however, i.e. in an in-line configuration instead of a dedicated by-pass circuit, a problem is encountered in that requirement as to allowable pressure differences in many automotive in-line filtering applications, conflict with the desirable pressure differences at use of micro-filters. In this respect the known micro-filter elements are less permeable at low oil temperatures for reason of increased viscosity of the oil. The latter circumstance demands for high pressure differences over a micro-filter device for letting through the oil. At the same time most of the systems in which a filter device is incorporated have a demand for very modest pressure differences, i.e. lower than what is demanded at normal operating temperatures. The same requirement for modest pressure difference over a filter unit often exists at relatively modest flows of oil through the system. For coping with this problem with a micro-filter element, the latter would have to be chosen with small resistance to oil penetration, i.e. with relatively low density and/or thickness of the filtering material. At proceeding so, the problem exists that the high efficiency characteristic of the micro-filter is strongly reduced, possibly to the extent that the functional and thereby economical advantage of it is lost, at least to the extent that in-line application of the micro-filter is strongly hampered.

It is therefore an object of the current invention to provide for a filtering device, and a method for designing the same which obviates the known problem while at least to large extent maintaining the high efficiency nature of micro-filters, such that they can economically and with at least large maintenance of functionality be applied in an in-tine configuration.

According to the current invention such is realised along the method steps of claim 1, and by a filtering device having the features as defined in the characterising portion of the first device claim.

With such a device it is assured, in accordance with the method defined by the invention, that a maximum allowable pressure difference is created over the filter device, and thus a maximum flow of oil through the micro fitter element, by both the application of a by-pass flow over the filter element via a restriction, and by the use of a valve. The restriction is defined by departing from allowed pressure difference at the lowest given oil flow through the system, while the valve system limits the pressure difference at larger flows by opening at the allowable pressure difference at a given largest flow of oil. In this manner, surprisingly by the creation of a first and an additional by pass flow over the filter element, the performance of the latter is considerably enhanced. This effect is realised in a surprisingly simple design of the basis of smart use of a per se abstract feature of an orifice, which provides that the pressure difference over it is the result of a constant times the oil density times the square of the speed of flow through the orifice. It was further realised that where the characteristic of an orifice, i.e. the oil density is largely independent from oil temperature, the filter element is not. Combination of these insights ultimately yielded the filter device according to the invention.

Where the mentioned by-pass flows may as well be provided in e.g. the housing of the filter device, they are according to the invention preferably provided as part of, or at least directly related to the filter element According to a further preferred embodiment the orifice and valve means are preferably integrated into a single unit. Favourable use is further made of pressure means known per se for pressurising an end closure means to an axial end face of the element, by using the latter for maintaining at least part of the valve system together. In this manner the valve system may at least partially favourably be produced and provided in loose parts.

The invention will now by way of example be elucidated further along a drawing in which:
Figure 1 is a cross section of an embodiment in accordance with the invention
Figure 2 is a graph illustrating the effect of and method underlying the current invention.

In the figures, identical reference numbers relate to identical or at least comparable technical features.

Figure one depicts a filtering device 1 comprising a housing 2 showing an upper lid part 3, a bottom lid part 4 and a central body 5 comprising a chamber 6 within which a filter element 7 is situated. The device shows communication ports 9 and 10, with port 9 forming an inlet and port 10 forming an outlet port, which ports may be connected to the leads of a hydraulic system, e.g. for lubricating a mechanical device in which the filter device may be incorporated.

The filter element 7 is in line with the current example preferably cylindrically shaped and comprises filtering material 8, carried by a central, perforated core 12. The core 12 in the current example comprises axially oriented, elongated perforations 13, of a length virtually matching that of the filter element 7. Alternative perforations such as bores or square holes may as well be used. The core 12 defines an interior space 14 for receiving oil filtered by the element 7 and passed through the perforations 13. The interior space 14 communicates with outlet port 10 of the filter device 1.

The axial end faces of the element 7 are shaped flat and oriented perpendicular to the axis of the filter element They are closed for passage of oil by so-called closure elements, which are of matching flattened shape. Such closure elements, in principle come loose, and are pressed against the respective element end face, such like closure element 15 depicted in the example. At least one of such elements may however also be integrated in the filter housing, e.g. by the part enclosed by receiving rims 16 in the bottom lid part 3. Such closure elements and/or ∼parts are preferably provided with annular and concentrically disposed ribs, designed for axial penetration in the filter material 8, thus providing an additional filtering safety for in unexpected cases where e.g. through pressure shocks in a said hydraulic system, the filter might become axially somewhat dislocated.

In the present and preferred example, the filter element 7 is pressed between the closure elements 15 and 5 via an elastically deformable means 17 such as a spring element, here embodied by a helical pressure spring. For positioning the latter the spring element 17 rests against the upper lid part 3 under presence of a location means such as the depicted dimple 18 or such as a protrusion, which means preferably correspond in diameter with the outer respectively inner diameter of the elastically means 17. The latter in a corresponding manner rests against the closure element 15, in casu via a loosely positioned central part 19, which is provided with a central bore 20, received by the main part of the closure element 15 in a positioning and receiving edge 21. In principle however, the parts 19 and 15 may be formed as a whole.

In connection with the central part 19 of the closure element 15, there is provided a pressure valve system 22 located in the interior space 14 of the filter element 7. It is in the present example supported by a rim 23, which in tum is supported by the closure element 15 via minor pillars. The valve system 22 further comprises a valve 25, which is supported, alternatively denoted urged towards the closure element, by an elastically deformable element 24, here in conformance with preference embodied by a helical pressure spring. In case of a helical spring the valve 25 is preferably provided with a projection or dimple corresponding to the inner or outer diameter of the pressure spring so as to promote stability of the valve 25. The latter, by means of a flat face, corresponds to that of the opposing face of the central part 19, so as to close the passage of oil by large quantities low oil pressure in the chamber 6 by contact with said central part 19. In the present embodiment a small passage is however provided from chamber 6 to interior space 14 by means of a bore 26, located preferably centrally in the valve 25, which bore provides for a minimum of oil flow by-passing the filter element at all times. The bore 26, alternatively denoted orifice 26, ensures a constant pressure drop (∼difference) over the filter device. In particular it does so independently from temperature.

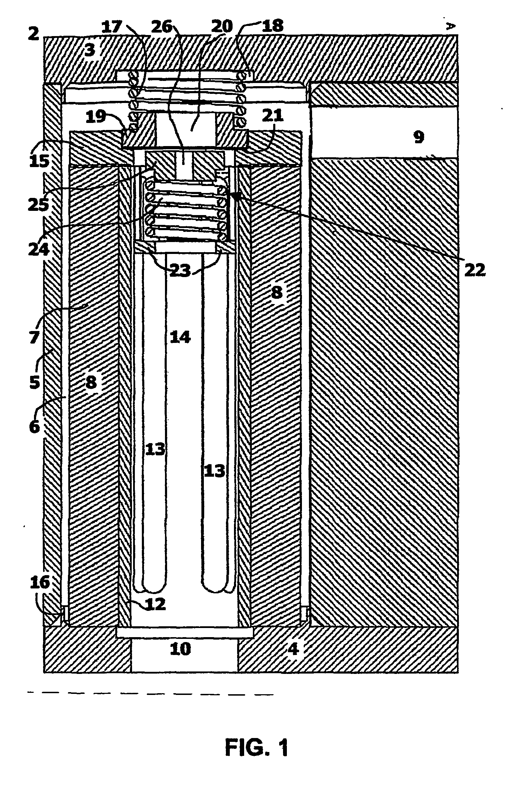

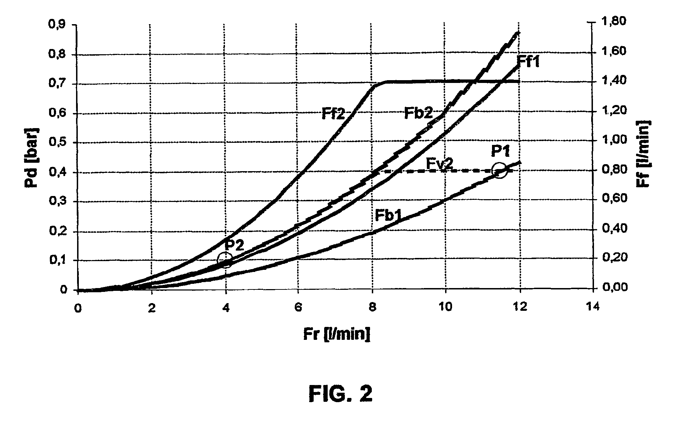

Figure 2 illustrates a design problem, existing at applying micro-filters in an in-line configuration and underlying the current invention. It further illustrates a design method for designing a filter device in accordance with the example of figure 1. In many systems a maximum allowed pressure difference P1 is allowed over a filter device. This maximum difference is set for large flows of oil through the system, and consequently through the filter device. The maximum thus set may however not be favourable for the operation of a micro-filter device. This requirement, which is often of no problem to full flow filters, can become even more disadvantageous by the fact that often at modest flows, a further, even lower allowed pressure difference P2 is often set. In this example P2 is in line with typical automotive values set at 100 mBar at low quantities of oil flow. These requirements to the filter device, and especially the latter, become all the more problematic to micro-filters at relatively low oil temperatures, i.e. as long as operating temperature, commonly about 90 degrees C has not been reached. The low viscosity of oil at low temperatures, combined with the relatively dense and thick layer of filtering material is due to this circumstance. So as to typify extreme cold circumstances, the exaggeration of a totally blocked filter element could be taken. For overcoming this problem it has in accordance with the invention been conceived to provide a by-pass means in the form of a bore 26 in an axial closure means 15 for the filter element. In this way, a minimum a minimum amount of oil may at all times by pass the filter element. An advantage of this solution is that the flow of oil through a restriction is virtually temperature independent. Therefore, a small amount of flow remains small at relatively high operating temperatures. Should however, the amounts of flow through the filter device increase, the pressure difference over the bore 26 will increase quadratic with the velocity of flow. Thus care should be taken so as to make the bore 26 of such magnitude, that at a given value of large flow of oil, the pressure difference Pd, will not be more than allowed by P1. Such precaution would typically render, at a flow Fr through the bore - alternatively denoted restriction -, a flow Ff through the micro-filter 7 as indicated by curve Ff1. As mentioned previously, at increasing velocities the pressure difference Pd increase with the square of the velocity through the bore. Consequently the flow of oil Ff through the filter element increases with said velocity, which is reflected by curve Ff1, In the example provided by the graph, at the amount of flow for which the pressure difference P1 is set, 400 mBar, this would render an actual flow of about 11,5 l/min through the restriction 26, and 0,8 l/min through the micro-filter 7 or a flow of Ff=0,7 l/min at an oil flow Fr = 8 l/min through the bore 26. The solution might seem ideal in that also the second requirement of maximum pressure difference Pd = P2 is met for a given lower amount of flow of oil through. At this given low amount of flow the actual pressure difference Pd would, with the bore or restriction magnitude related to Fb1, only be 50 mBar. Thus a margin of 100% exists for this situation.

Should on the other hand, the flow through the filter element 7 be optimised for the given lower amount of flow, i.e. at P2, in that a restriction of smaller diameter would have been provided, the pressure difference Pd over the filter device 1 would in accordance with flow curve Fb2, become double of what is allowed at the given large flow of P2. Therefore, in order to optimise the flow of oil through the micro-filter 7 in relation to the flow of oil through the conceived by pass means for the filter element, it is in accordance with the invention further conceived to include in the by-pass means a pressure valve system 22, which opens at 400 mBar. This provision ensures that the requirement set by P1 will be met al all times, i.e. at all flows, as is illustrated by the dotted flow line Fv2, which at lower pressure differences follows curve Fb2. In line with the thus increased pressure difference Pd, the flow of oil through the by-pass filter is increased to 1,4 l/min ar maximum, as is illustrated by curve Ff2. In connection with the increased, in casu largely doubled (up to Fr = 8 l/min) pressure difference over the restriction 26, the maximum flow of oil through filter elements is increased, in casu doubled. It may also be noticed that the maximum flow Ff of oil through the filter element 7 is realised at much lower overall flows of oil through the device than in the case of a restriction only. In casu, the maximum amount of flow of 1,4 Umin through the micro-filter is in this example already reached at about 8 l/min instead of at about 11,5 l/min, as would have been the case in the situation where the micro filter device would have been adapted to the requirements solely by the use of a restriction.

The invention, thus relates to a method of design for optimising the use of a micro-filter for the situation in which at different flows through the device different pressure differences over the filter device are allowed.

The invention, apart from the following claims, also relates to the preceding description and all details and aspects in the drawing which are directly and unambiguously derivable there from, at least by a man skilled in the art.

## Claims

1. Method of design for a micro-filter device (1), for optimising the same for use in a situation in which at different flows of oil through the device (1), different pressure differences Pd over the device (1) are allowed, comprising the steps of determining the minimum magnitude, in particular the minimum cross section of a restriction (26) for allowing a minimum amount of flow of oil for by-passing a micro-filter element (7) of the device (1) at all conditions, required for attaining a given maximum pressure difference (P2) over the device at a lowest given amount of flow of oil through the device (1), and of limiting the maximum pressure difference Pd to a maximum pressure difference (P1) given at a largest given amount of flow through the device (1) by the use of a pressure valve system (22) opening at said maximum pressure difference and creating a second flow of oil by-passing the filter element (7) once said maximum pressure difference (P1) has been reached.

2. Method in accordance with claim 1, in which the cross-section of the restriction (26) is chosen to be within a range from minus 10% from and to a cross-section required for attaining said maximum allowed pressure difference (P2) at said lowest given flow of oil through the device, preferably equal to said pressure difference (P2).

3. Method in accordance with claim 1 or 2, in which the opening pressure of the valve system (22) is designed to be a pressure differences value Pd which, at said maximum given amount of oil flow, is within a range of minus 10% from and to said given maximum pressure difference value (P1), preferably equal to said pressure difference (P1).

4. Method in accordance with any of the preceding claims, where the cross section of the orifice (26) and/or the opening pressure of the pressure valve system (22) as applied to a design following from the method is set at any of the indicated values, in particular at the minimum allowable cross section thus defined, and/or the pressure valve system opening value at said maximum allowable pressure difference.

5. Filtering device (1) comprising a micro-filter (7), the axial end faces of which are at least largely closed for passage of oil by axial end face closure means (5, 15), **characterised in that** the device is provided with both an orifice (26) and a pressure valve system (22) allowing a flow of oil by-passing the filter element (7), wherein the orifice (26) provides for a minimum flow of oil by passing the filter element (7) at all conditions.

6. Device (1) according to the preceding device claim, **characterised in that** at least one of both provisions (26, 22) is incorporated in an end closure means (15).

7. Device (1) according to any of both preceding device claims, **characterised in that** the valve system (22) provides for an additional by-passing flow of oil on condition that a maximum allowable pressure difference over the filter device (1) is reached.

8. Device (1) according to any of the preceding device claims, **characterised in that** the orifice (26) is integrated in a valve system part (25).

9. Device (1) according to any of the preceding device claims, **characterised in that** the valve system (22) comprises a pressure spring (24), and is preferably incorporated in the interior space (14) of the filter element (7), preferably near an axial end thereof.

## Patentansprüche

1. Verfahren zur Auslegung einer Mikrofiltervorrichtung (1) um selbige zur Verwendung in einer Situation zu optimieren, in der bei unterschiedlichen Ölflüssen durch die Vorrichtung (1) unterschiedliche Druckdifferenzen Pd auf die Vorrichtung (1) erlaubt sind, umfassend die Schritte des Bestimmens des minimalen Betrags, insbesondere des minimalen Querschnitts einer Drosselstelle (26), um zu erlauben, dass eine minimale Menge eines Ölflusses zur Überbrückung eines Mikrofilterelements (7) der Vorrichtung bei allen Bedingungen, die erforderlich ist, um eine vorgegebene Maximaldruckdifferenz (P2) auf die Vorrichtung bei einer niedrigsten vorgegebenen Menge an Ölfluss durch die Vorrichtung (1) zu erlangen, und zur Begrenzung der maximalen Druckdifferenz Pd auf eine maximale Druckdifferenz (P1), die bei einer größten vorgegebenen Menge an Ölfluss durch die Vorrichtung (1) durch die Verwendung eines Druckventilsystems (22) gegeben ist, das sich bei der maximalen Druckdifferenz öffnet und einen zweiten Fluss an Öl schafft, der mittels Bypass an dem Filterelement (7) vorbei fließt, wenn die besagte maximale Druckdifferenz (P1) erreicht wurde.

2. Verfahren nach Anspruch 1, wobei der Querschnitt der Drosselstelle (26) so ausgewählt wird, dass er innerhalb eines Bereichs von minus 10 % von und zu einem Querschnitt liegt, der erforderlich ist, um besagte maximal zulässige Druckdifferenz (P2) bei besagtem geringsten vorgegebenen Öldurchfluss durch die Vorrichtung zu erlangen, vorzugsweise gleich der Druckdifferenz (P2).

3. Verfahren nach Anspruch 1 oder 2, wobei der Öffnungsdruck des Ventilsystems (22) so ausgelegt wird, dass er ein Druckdifferenzwert Pd ist, welcher bei dem besagten maximalen vorgegebenen Öldurchfluss innerhalb eines Bereiches von minus 10 % von und zu dem vorgegebenen maximalen Druckdifferenzwert (P 1) liegt, vorzugsweise gleich der Druckdifferenz (P1).

4. Verfahren nach einem der vorstehenden Ansprüche, wobei der Querschnitt der Drosselblende (26) und/oder der Öffnungsdruck des Druckventilsystems (22) wie er auf eine Ausgestaltung aufgebracht wird, die aus dem Verfahren folgt, auf irgendeinen der angegebenen Werte eingestellt ist, insbesondere auf einen kleinsten zulässigen Querschnitt, der so definiert wurde, und/oder auf den Druckventilöffnungswert bei der maximale zulässigen Druckdifferenz.

5. Filtervorrichtung (1) umfassend einen Mikrofilter (7), dessen axiale Endseiten zumindest in weitem Maße zum Durchtritt für Öl durch axiale Endseitenschließmittel (5, 15) geschlossen sind, **dadurch gekennzeichnet, dass** die Vorrichtung sowohl mit einer Drosselblende (26) und einem Druckventilsystem (22) ausgestattet ist, die erlauben, dass ein Ölfluss mittels Bypass an dem Filterelement (7) vorbeifließt, wobei die Drosselblende (26) einen minimalen Ölfluss bereitstellt, indem Öl mittels Bypass an dem Filterelement (7) bei allen Bedingungen vorbeigeführt wird.

6. Vorrichtung (1) nach dem vorstehenden Anspruch, **dadurch gekennzeichnet, dass** zumindest eine der beiden vorgesehenen Vorrichtungen (26, 22) in ein Verschlussmittel (15) eines Endes aufgenommen ist.

7. Vorrichtung (1) nach einem der beiden vorstehenden Ansprüche, **dadurch gekennzeichnet, dass** das Ventilsystem (22) einen zusätzlichen mittels Bypass vorbeigeleiteten Öldurchfluss bei einer Bedingung bereitstellt, dass eine maximal zulässige Druckdifferenz über die Filtervorrichtung (1) erreicht wird.

8. Vorrichtung nach einem der vorstehenden Ansprüche, **dadurch gekennzeichnet, dass** die Drosselblende (26) in einen Ventilsystemabschnitt integriert ist.

9. Vorrichtung nach einem der vorstehenden Ansprüche, **dadurch gekennzeichnet, dass** das Ventilsystem (22) eine Druckfeder (24) umfasst, die vorzugsweise in den inneren Raum (14) des Filterelements (7) eingebracht ist, vorzugsweise nahe einem von dessen axialen Enden.

## Revendications

1. Procédé de conception pour un dispositif de microfiltration (1), pour optimiser ce dernier pour une utilisation dans une situation dans laquelle, à des débits d'huile différents dans le dispositif (1), des différences de pression Pd différentes sur le dispositif (1) sont autorisées, comprenant les étapes de détermination de l'amplitude minimum, en particulier la section minimum d'un rétrécissement (26) pour autoriser une quantité minimum de flux d'huile pour contourner un élément de microfiltration (7) du dispositif (1) dans toutes les conditions, nécessaire pour atteindre une différence de pression maximum donnée (P2) sur le dispositif pour un niveau de débit d'huile donné le plus bas dans le dispositif (1), et de limitation de la différence de pression maximum Pd à une différence de pression maximum (P1) donnée à un niveau de débit donné le plus grand dans le dispositif (1) par l'utilisation d'un système de soupape de pression (22) qui s'ouvre à ladite différence de pression maximum et qui crée un second flux d'huile contournant l'élément filtrant (7) une fois que ladite différence de pression maximum (P1) a été atteinte.

2. Procédé selon la revendication 1, dans lequel la section du rétrécissement (26) est choisie de façon à être dans une plage de plus ou moins 10 % d'une section nécessaire pour atteindre ladite différence de pression maximum autorisée (P2) audit débit d'huile donné le plus bas dans le dispositif, de préférence égal à ladite différence de pression (P2).

3. Procédé selon la revendication 1 ou 2, dans lequel la pression d'ouverture du système de soupape (22) est conçue pour être une valeur de différence de pression Pd qui, audit débit d'huile donné maximum, se trouve dans une plage de plus ou moins 10 % de ladite valeur de différence de pression maximum donnée (P1), de préférence égale à ladite différence de pression (P1).

4. Procédé selon l'une quelconque des revendications précédentes, dans lequel la section de l'orifice (26) et/ou la pression d'ouverture du système de soupape de pression (22) appliquée à une conception obtenue par le procédé est réglée sur n'importe laquelle des valeurs indiquées, en particulier sur la section minimum admissible ainsi définie, et/ou la valeur d'ouverture du système de soupape de pression à ladite différence de pression maximum admissible.

5. Dispositif de filtration (1) comprenant un microfiltre (7), dont les faces d'extrémités axiales sont au moins en grande partie fermées au passage d'huile par des moyens de fermeture de faces d'extrémités axiales (5, 15), **caractérisé en ce que** le dispositif est pourvu à la fois d'un orifice (26) et d'un système de soupape de pression (22) permettant un flux d'huile contournant l'élément filtrant (7), l'orifice (26) permettant un flux d'huile minimum contournant l'élément filtrant (7) dans toutes les conditions.

6. Dispositif (1) selon la précédente revendication de dispositif, **caractérisé en ce qu'**au moins l'un des deux accessoires (26, 22) est incorporé dans un moyen de fermeture d'extrémité (15).

7. Dispositif (1) selon l'une quelconque des précédentes revendications de dispositif, **caractérisé en ce que** le système de soupape (22) permet un flux d'huile de contournement supplémentaire à la condition qu'une différence de pression maximum admissible sur le dispositif de filtration (1) soit atteinte.

8. Dispositif (1) selon l'une quelconque des précédentes revendications de dispositif, **caractérisé en ce que** l'orifice (26) est intégré à une pièce (25) du système de soupape.

9. Dispositif (1) selon l'une quelconque des précédentes revendications de dispositif, **caractérisé en ce que** le système de soupape (22) comprend un ressort de pression (24) et est de préférence incorporé dans l'espace intérieur (14) de l'élément filtrant (7), de préférence près d'une extrémité axiale de ce dernier.
